# EUROPEAN PATENT SPECIFICATION

(11) **EP 1 602 533 B1**
(45) Date of publication and mention of the grant of the patent: **21.05.2008**
(21) Application number: 05006817.0
(22) Date of filing: 29.03.2005
(51) Int. Cl.: B60R 21/16

(54) **Airbag apparatus and method of manufacturing vehicle's airbag**
Airbagvorrichtung und Herstellungsverfahren für Airbagvorrichtung
Dispositif d'airbag et procédé de fabrication de dispositif d'airbag

(30) Priority: 31.05.2004 JP 2004161144
(43) Date of publication of application: 07.12.2005
(73) Proprietor: TAKATA CORPORATION, Minato-ku, Tokyo 106-8510 (JP)
(72) Inventor: Matsui, Yoshitaka, Tokyo 106-8510 (JP); Tsujimoto, Kei, Tokyo 106-8510 (JP); Nakazawa, Wataru, Tokyo 106-8510 (JP); Masahiko, Kaifuki, Fuchu-cho Aki-gun Hiroshima (JP)
(74) Representative: Vossius & Partner

(56) References cited:
- US-A- 5 018 761
- US-A- 5 547 215
- US-A1- 2004 026 909

## Description

The present invention relates to a technique of constructing a vehicle's airbag to be mounted to a vehicle.

In the related art, a structure of a vehicle's airbag which is deployed and inflated in a passenger protection area in a vehicle in case of vehicle accident is known. US 2004/0,026,906 relates to an airbag module for motor-vehicles equipped with a conventional driver's airbag.
The airbag is arranged in the region between a steering wheel and an instrument panel and in addition to a driver's airbag for supporting the steering wheel and steering column. The effect achieved by this is that the driver's airbag is better positioned with regard to the vehicle occupant since deformation of the steering wheel by the forces acting on the driver's airbag in the event of a crash is prevented or reduced by means of the airbag. The inflated airbag can extend as far as the wind shield of the vehicle. As a result, the forces introduced into the steering wheel in the event of a crash are also conducted away into the wind shield. In addition, contact of a vehicle occupant who is not wearing his/her seat belt with the wind shield can be prevented by suitably defining the sides of the inflated airbag. For example, in JP-A-3-10947, a vehicle's passenger airbag to be installed for a passenger seat of the vehicle is described. In JP-A-3-10947, a possibility to improve constrainability of the passenger by the vehicle's airbag by adjusting the amount of injection of gas at an injection port formed on the vehicle's airbag is proposed. However, when designing the vehicle's airbag of this type, there is increasing demand for thorough protection of the passenger by pursuing rationality of passenger constraint mode by the vehicle's airbag while paying attention to the behavior of the vehicle's airbag upon vehicle accident. For example, when employing a front window having significantly rounded shape by design, the inclination of a front pillar (A-pillar) which constitutes a vehicle wall may increases correspondingly. However, in the vehicle's airbag which is deployed and inflated in the vicinity of the vehicle wall, there is a demand for thorough protection of the passenger by deploying and inflating the vehicle's airbag in a desired mode while taking the shape of the vehicle such as the vehicle wall into consideration.

In view of such circumstances, it is an object of the present invention to provide a technique of constructing an airbag apparatus which contributes to achieve thorough protection of a passenger in case of vehicle accident.

The present invention is constructed for achieving the object described above. The present invention can be applied to a technique of constructing an airbag apparatus, which is to be mounted to a vehicle such as motor vehicles.

The first aspect of the present invention for achieving the object described above is an airbag apparatus as set forth in Claim 1.
The airbag apparatus as set forth in Claim 1 at least includes a vehicle's airbag and gas supply means.
The vehicle's airbag of the present invention is deployed and inflated rearwardly of a vehicle from the front side of the vehicle forwardly of a vehicle passenger toward a passenger protection area for protecting the vehicle passenger in case of vehicle accident and includes a right airbag section extending in the vertical direction on the right side of the vehicle and a left airbag section extending in the vertical direction on the left side of the vehicle in the deployed and inflated state. In the present invention, the right airbag section and the left airbag section are sufficient as long as they include components which extend like a wall in the vertical direction, and the entire shape may be curved shape or linear shape.
The gas supply means of the present invention is means having a function to supply gas for deployment and inflation to the vehicle's airbag configured as described above. Typically, the gas supply means of the present invention is configured using an inflator having a function to generate gas for deployment and inflation upon occurrence of the vehicle accident.
In particular in the present invention, the vehicle's airbag is configured in such a manner that, in the deployed and inflated state, the position of the upper edge of one of the right airbag section or the left airbag sections which is closer to a vehicle wall is lower than that of the upper edge of the other airbag section. Accordingly, the one airbag section of the vehicle's airbag which is deployed and inflated is prevented from interfering with the vehicle wall. More specifically, in the vehicle's airbag for a passenger seat which is installed on the left side of a right-hand drive car, the position of the upper edge of the left airbag section in the deployed and inflated state is lower than the position of the upper edge of the right airbag section. In the vehicle's airbag for a passenger seat installed on the right side of a left-hand drive car, the position of the upper edge of the right airbag section in the deployed and inflated state is lower than the position of the upper edge of the left airbag section. Accordingly, one of the airbag sections of the vehicle's airbag deployed and inflated in the passenger protection area is prevented from interfering with the vehicle wall. The term "vehicle wall" in this specification designates a member which constitutes a vehicle body of the vehicle, and widely includes members which may interfere with the vehicle's airbag in the deployed and inflated state. Typically, the vehicle wall of the present invention includes a pillar of a vehicle body, a window, a door, and a seat or the like. The "prevention of interference" must simply prevent the action of the vehicle's airbag when being deployed and inflated from being hindered by the vehicle wall, and hence includes a mode in which a space for avoiding interference is formed between one of the airbag section and the vehicle wall as a matter of course, and a mode in which the one airbag section and the vehicle wall come into abutment to an extent which does not hinder the action of the vehicle's airbag.
With the airbag apparatus configured as set forth in Claim 1, when the vehicle's airbag is deployed and inflated in the passenger protection area in case of vehicle accident, one of the left and right airbag sections which is closer to the vehicle wall is prevented from interfering with the vehicle wall and, for example, such phenomenon that one of the airbag sections interferes with the vehicle wall and bounces therefrom can be prevented. Accordingly, the vehicle's airbag can be deployed and inflated in an intended and desired mode in the passenger protection area, whereby thorough protection of the passenger is achieved in case of vehicle accident.

The second aspect of the present invention for achieving the aforementioned object is a method of manufacturing a vehicle's airbag as set forth in Claim 2.
The manufacturing method as set forth in Claim 2 relates to a method of manufacturing a vehicle's airbag like the vehicle's airbag which constitutes the airbag apparatus as set forth in Claim 1.
The method of manufacturing the vehicle's airbag of the present invention includes a first step of preparing a plurality of panels which constitutes the vehicle's airbag, and a second step for sewing the plurality of panels.
In the first step, a first panel which corresponds to one of the right airbag section and the left airbag section of the vehicle's airbag and is closer to the vehicle wall, a second panel which corresponds to the other airbag section, and a third panel interposed between the first panel and the second panel are prepared. Then, these panels are fabricated so that the vertically extending length of the first panel becomes shorter than the vertically extending length of the second panel. The vehicle's airbag of the present invention may be configured only by the first panel, the second panel, and the third panel or may be configured by combining panels other than these three panels as needed. In the present invention, the vehicle's airbag may be configured of one each of the first panel, the second panel, and the third panel, or a plurality of members of those.
In the second step, the third panel is interposed between the first panel and the second panel, and these panels are stitched to each other to form a bag-shaped vehicle's airbag. Then, it is formed in such a manner that the position of the upper edge of the first panel of the vehicle's airbag in the deployed and inflated state comes to a position lower than the upper edge of the second panel. In the vehicle's airbag, the shape such that the upper edge of the first panel comes to a position lower than the upper edge of the second panel may be achieved by the shapes of the respective panels which constitute the vehicle's airbag, or may be achieved by tensile force of a belt-shaped tether or the like which connects the inner wall surfaces of the vehicle's airbag. With the vehicle's airbag manufactured by these steps, one of the left and right airbag sections including the first panel is prevented from interfering with the vehicle wall when being deployed and inflated in case of vehicle accident.
With the manufacturing method as set forth in Claim 2, the vehicle's airbag which enables deployment and inflation in an intended and desired mode in the passenger protection area may be manufactured, whereby thorough protection of the passenger in case of vehicle accident is achieved.

As described above, according to the present invention, thorough protection of the passenger in case of vehicle accident is achieved by the vehicle's airbag which can be deployed and inflated in an intended and desired mode in the passenger protection area.

Referring now to the drawings, an embodiment of the present invention will be described in detail.
Fig. 1 is a drawing showing a state in which an airbag apparatus 110 is installed on a vehicle body 101 of a motor vehicle according to this embodiment;
Fig. 2 is a perspective view of a vehicle's airbag 120 in the deployed and inflated state;
Fig. 3 is a front view of the vehicle's airbag 120 in the deployed and inflated state when viewed from behind the vehicle;
Fig. 4 shows a side view of the vehicle's airbag 120 in the deployed and inflated state when viewed from the right side of the vehicle;
Fig. 5 shows a state before manufacturing the vehicle's airbag 120 of this embodiment by stitching; and
Fig. 6 shows a state in which the vehicle's airbag 120 of this embodiment is deployed and inflated in a passenger protection area 140.
Referring to Fig. 1 to Fig. 4 first, the structure of an airbag apparatus 110 of this embodiment will be described. The airbag apparatus 110 is an airbag apparatus to be mounted to a motor vehicle of a type having a right-hand drive corresponding to a passenger seated on a passenger seat.

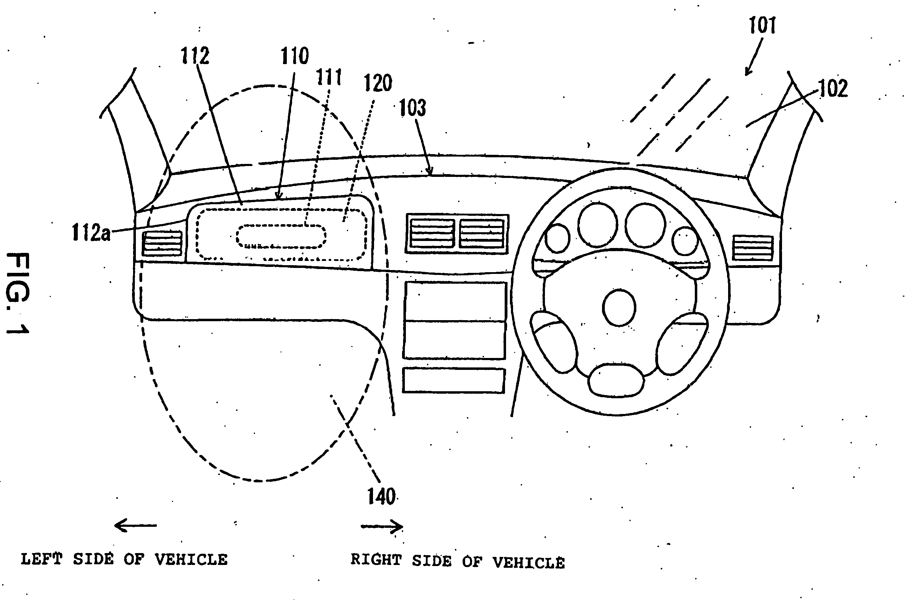

A state in which the airbag apparatus 110 of this embodiment is installed on a vehicle body 101 of the motor vehicle is shown in Fig. 1.
As shown in Fig. 1, the airbag apparatus 110 as an "airbag apparatus" of the present invention is mounted to a dashboard 103 located behind a front window 102 of the vehicle body 101 on the side of the passenger seat. The airbag apparatus 110 basically includes a vehicle's airbag 120 to be stored in a state of being folded into a predetermined folded shape (accordion shape or roll shape), an inflator 111 generating gas for deployment and inflation and being capable of supplying the gas to an internal space in the vehicle's airbag 120 (which constitutes a "gas supply means" in the present invention), and an airbag cover 112 for covering the passenger side of the vehicle's airbag 120. In case of vehicle accident such as vehicle collision, the vehicle's airbag 120 has a function to be deployed and inflated in a passenger protection area 140 for the passenger seated on the passenger seat while tearing the airbag cover 112 along a tear line 112a. The passenger protection area 140 is defined as an area for protecting the passenger seated on the passenger seat quickly and reliably, and corresponds to the "passenger protection area" in the present invention.

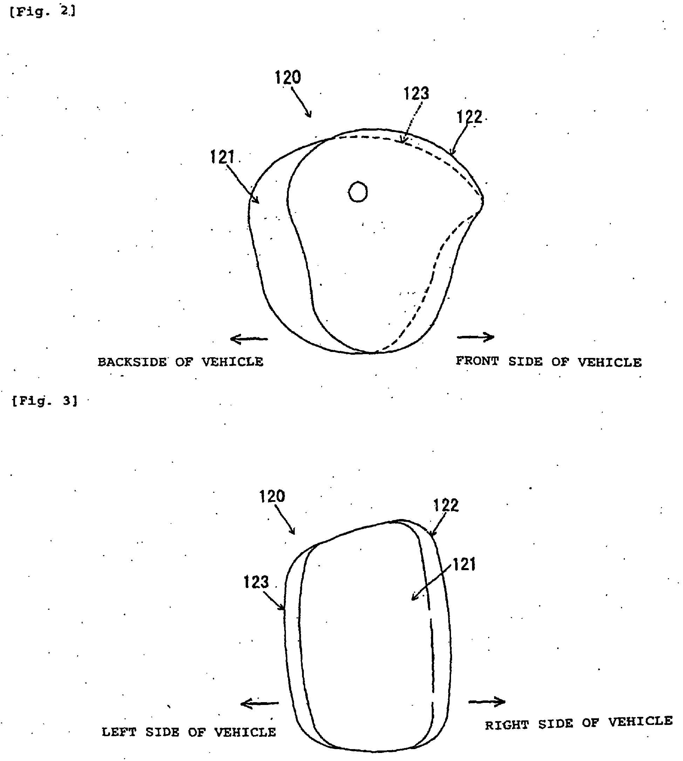

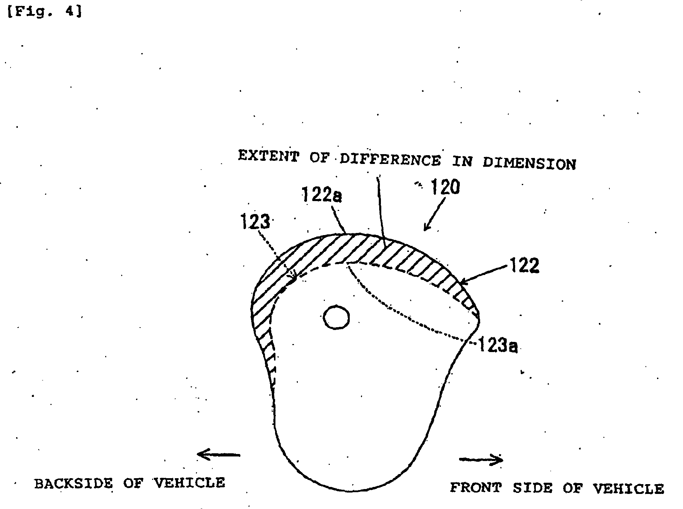

Here, the structure of the vehicle's airbag 120 in the deployed and inflated state is shown in Fig. 2 to Fig. 4. Fig. 2 is a perspective view of the vehicle's airbag 120 in the deployed and inflated state; Fig. 3 is a front view of the vehicle's airbag 120 in the deployed and inflated state when viewed from behind the vehicle; and Fig. 4 shows a side view of the vehicle's airbag 120 in the deployed and inflated state when viewed from the right side of the vehicle.

As shown in Fig. 2 to Fig. 4, the vehicle's airbag 120 of this embodiment includes, in the deployed and inflated state, a right airbag section 122 extending vertically like a wall on the right side of the vehicle, a left airbag section 123 extending vertically like a wall on the left side of the vehicle, and a center airbag section 121 extending between the right airbag section 122 and the left airbag section 123. The vehicle's airbag 120 corresponds to the "vehicle's airbag" in the present invention.
In this embodiment, in particular, the right airbag section 122 and the left airbag section 123 are formed asymmetrically. More specifically, the right airbag section 122 and the left airbag section 123 are formed substantially symmetrically as shown in Fig. 4, while when they are overlapped with each other, the left airbag section 123 located on the left side of the vehicle is smaller than the right airbag section 122 located on the right side of the vehicle by an extent of difference in dimension (a hatched portion in Fig. 4) as shown in Fig. 3. In other words, the left airbag section 123 is adapted in such a manner that the vertically extending length in Fig. 4 is shorter than the right airbag section 122, and the position of an upper edge 123a of the left airbag section 123 is adapted to be lower than the position of an upper edge 122a of the right airbag section 122. Accordingly, when the vehicle's airbag 120 is deployed and inflated, the position of the upper edge 123a of the left airbag section 123 comes to a position lower than the upper edge 122a of the right airbag section 122.
In the vehicle's airbag 120 in the deployed and inflated state, the left airbag section 123 corresponds to the airbag section on the side closer to the vehicle wall (a vehicle wall 105 described later), and corresponds to "one of the airbag sections" in the present invention. On the other hand, the right airbag section 122 corresponds to "the other airbag section" in the present invention.

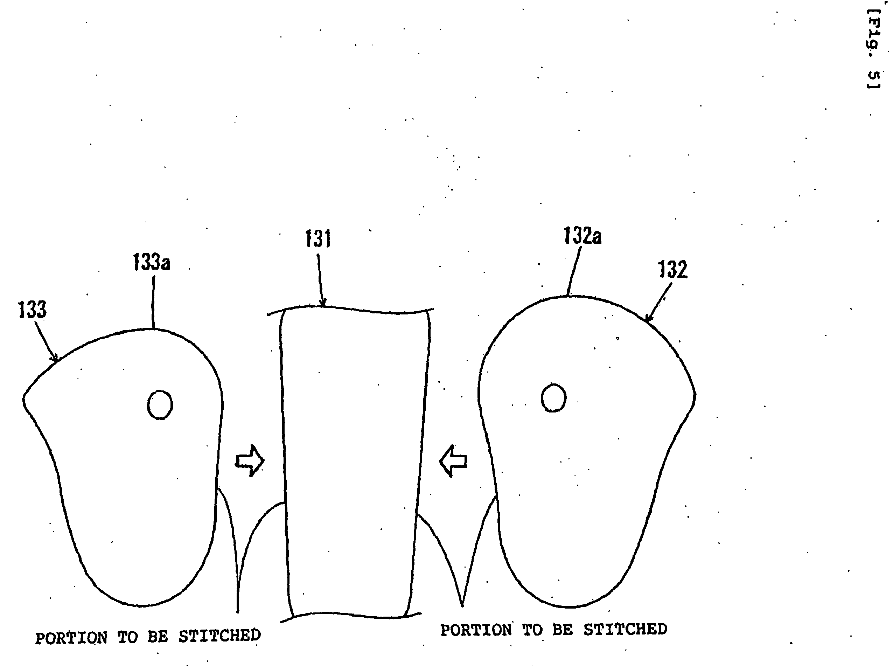

Subsequently, the procedure of manufacturing the vehicle's airbag 120 having the structure as described above will be described referring to Fig. 5. Fig. 5 shows a state before manufacturing the vehicle's airbag 120 having the structure described above by stitching.

When manufacturing the vehicle's airbag 120 having the structure as described above, three textile fabric panels including a main panel 131, a right panel 132 and a left panel 133 which are asymmetry as shown in Fig. 5 are prepared in the step of machining a textile fabric. The main panel 131, the right panel 132, the left panel 133 are textile fabric panels having dimensions matching respectively to the center airbag section 121, the right airbag section 122, and the left airbag section 123. Therefore, the left side panel 133 is adapted such that the vertically extending length is shorter than the right panel 132, and the position of an upper edge 133a of the left panel 133 is lower than the position of an upper edge 132a of the right panel 132. The main panel 131 in this embodiment corresponds to the "third panel", the right panel 132 corresponds to the "second panel" in the present invention, and the left panel 133 corresponds to the "first panel" in the present invention.

As the next step, in a state in which the right panel 132 and the left panel 133 are disposed on both sides of the main panel 131, these panels are stitched to each other along the stitching portion. Accordingly, the vehicle's airbag 120 of the structure shown in Fig. 2 to Fig. 4, that is, the vehicle's airbag 120 having the structure such that the main panel 131 itself corresponds to the center airbag section 121, the right panel 132 itself corresponds to the right airbag section 122, and the left panel 133 itself corresponds to the left airbag section 123 is manufactured. The manufacturing method of the vehicle's airbag 120 as described above corresponds to the "method of manufacturing a vehicle's airbag".
In the vehicle's airbag 120 manufactured in the steps described above, when being deployed and inflated, the upper edge 132a of the right panel 132 is aligned with the upper edge 122a of the right airbag section 122, and the upper edge 133a of the left panel 133 is aligned with the upper edge 123a of the left airbag section 123. In other words, according to this embodiment, the shape such that the position of the upper edge 123a of the left airbag section 123 comes to a position lower than the position of the upper edge 122a of the right airbag section 122 is defined by the shape of the right panel 132 and the left panel 133. When forming such a shape, it is also possible to provide a belt-shaped tether or the like for connecting the inner wall surfaces with respect to each other in the vehicle's airbag 120 as needed, and utilize the tension force by the tether.

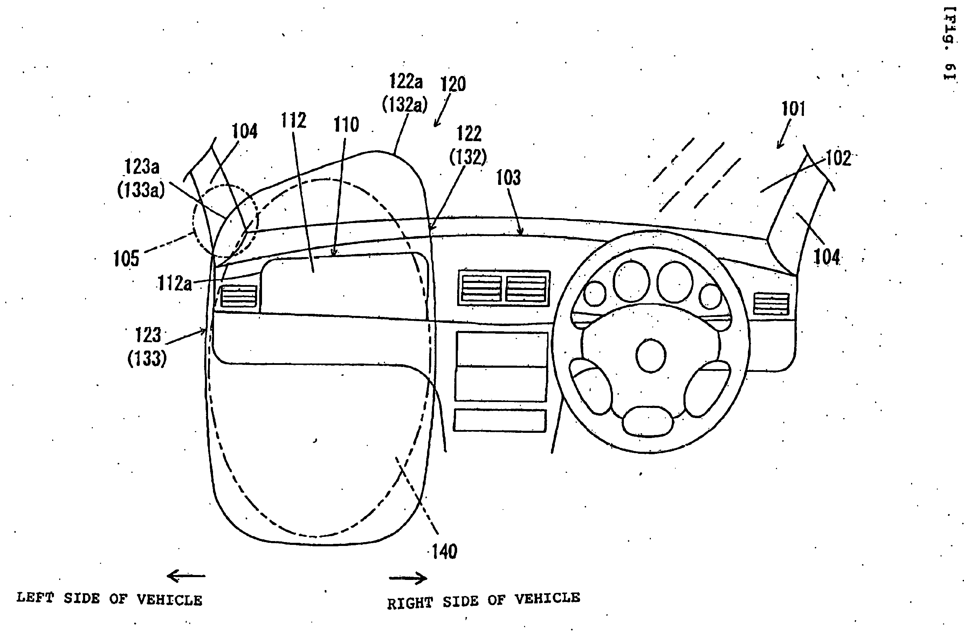

Referring now to Fig. 6, the operation of the vehicle's airbag 120 having the aforementioned structure will be described. Fig. 6 shows a state in which the vehicle's airbag 120 of this embodiment is deployed and inflated in a passenger protection area 140.

In case of vehicle accident, the airbag apparatus 110 in the initial state is activated, and gas for deployment and inflation is generated from an inflator (the inflator 111 in Fig. 1). The gas for deployment and inflation generated from the inflator flows into the internal space of the vehicle's airbag 120. Accordingly, the entire vehicle's airbag 120 initiates the deployment and inflation (the action to be inflated while being deployed), and hence the airbag cover 112 is pushed and opened by tearing along the tear line 112a, whereby the airbag is deployed and inflated rearward toward the passenger protection area 140 on the rear side of the vehicle as a whole.

In this manner, the vehicle's airbag 120 is deployed and inflated in the area covering the passenger protection area 140 as shown by a chain double-dashed line in Fig. 6. Then, the vertically extending right airbag section 122 is formed on the right side of the vehicle in the vehicle's airbag 120, and the vertically extending left airbag section 123 is formed on the left side of the vehicle.
At this time, since the vehicle's airbag 120 of this embodiment is configured in such a manner that the position of the upper edge 123a of the left airbag section 123 comes to a position lower then the position of the upper edge 122a of the right airbag section 122 as described above, a space for avoiding interference can be formed between the left airbag section 123 and the vehicle wall portion 105 from the initiation of the deployment and inflation to the completion of the deployment and inflation, whereby the left airbag section 123 is prevented from interfering with the vehicle wall. The vehicle wall 105 corresponds to the "vehicle wall" in the present invention. In other words, in this embodiment, when the vehicle's airbag 120 is being deployed and inflated, the shape of the left airbag section 123 (left panel 133), specifically the relative vertical position of the upper edge 123a (upper edge 133a) with respect to the upper edge 122a (upper edge 132a) is determined so as to avoid interference between the left airbag section 123 and the vehicle wall 105. The vehicle wall 105 is a portion formed by a front pillar (A-pillar) 104 and the front window 102, and the structure in which the left airbag section 123 interferes with the vehicle wall 105 may be a cause to impair deployment and inflation of the vehicle's airbag 120 in a desired mode. In particular, when employing the front window 102 having significantly rounded shape by design, the inclination of the front pillar 104 increases accordingly, whereby the possibility of interference of the left airbag section 123 with the vehicle wall 105 increases. Accordingly, in this embodiment, the structure in which interference between the left airbag section 123 and the vehicle wall 105 is avoided.

According to the structure of the vehicle's airbag 120 of this embodiment as described above, when the vehicle's airbag 120 is deployed and inflated in the passenger protection area 140 in case of vehicle accident, interference of the left airbag section 123 with the vehicle wall 105 may be avoided. More specifically, such phenomenon that the left airbag section 123 interferes with the vehicle wall 105 and bounces therefrom when being deployed and inflated can be prevented. Accordingly, the vehicle's airbag 120 can be deployed and inflated in an intended and desired state in the passenger protection area 140.

The present invention is not limited to the embodiment described above, and various applications or modification can be made. For example, the following respective embodiments to which the aforementioned embodiments are applied can be implemented.

In the aforementioned embodiment, the vehicle's airbag 120 formed by stitching the three panels including the main panel 131, the right panel 132, and the left panel 133 together has been described. However, the present invention may be configured of one each of the main panel 131, the right panel 132, the left panel 133, or a plurality of panels of those. It is also possible to combine the panels other than the main panel 131, the right panel 132, and the left panel 133.

Although the airbag apparatus to be mounted for the passenger seated on the passenger seat of the motor vehicle has been described in the above-described embodiment, the present invention can be applied to the structure of the airbag apparatus which is mounted for a passenger seated on a seat other than the passenger seat. In this case, the vehicle wall which may be an object from which interference of the vehicle's airbag is avoided may be determined as needed according to the type of the vehicle's airbag and the vehicle structure in the periphery of the vehicle's airbag. For example, the vehicle wall is constituted of the pillar of the vehicle body, the window, the door, the seat or the like.

Although the motor vehicle's airbag apparatus has been described in the above-described embodiment, the present invention is a technique which can be applied to the airbag apparatus in vehicles other than motor vehicle, for example in ships or trains.

## Claims

1. An airbag apparatus comprising:
a vehicle's airbag (120) which is deployed and inflated rearwardly of a vehicle from the front side of the vehicle forwardly of a vehicle passenger toward a passenger protection area (140) for protecting the vehicle passenger in case of vehicle accident and comprises a right airbag section (122) extending in the vertical direction on the right side of the vehicle and a left airbag section (123) extending in the vertical direction on the left side of the vehicle in the deployed and inflated state; and
a gas supply means (111) for supplying gas for deployment and inflation to the vehicle airbag, **characterized in that**
the vehicle's airbag is configured in such a manner that the position of the upper edge (123a) of one of the airbag sections which is closer to a vehicle wall (105) is lower than the upper edge (122a) of the other airbag section, whereby the one airbag section is prevented from interfering with the vehicle wall.

2. A method of manufacturing a vehicle's airbag which is deployed and inflated rearwardly of a vehicle from the front side of the vehicle forwardly of a vehicle passenger toward a passenger protection area (140) for protecting the vehicle passenger in case of vehicle accident and comprises a right airbag section (122) extending in the vertical direction on the right side of the vehicle and a left airbag section (123) extending in the vertical direction on the left side of the vehicle in the deployed and inflated state, **characterized by**:
a step of preparing a first panel (133) which corresponds to one of the right airbag section and the left airbag section of the vehicle's airbag located at a position closer to the vehicle wall (105), a second panel (132) which corresponds to the other airbag section, and a third panel (131) interposed between the first panel and the second panel, and fabricating so that the vertically extending length of the first panel becomes shorter than the vertically extending length of the second panel; and
a forming step of interposing the third panel between the first panel and the second panel, and stitching these panels to each other to form a bag-shaped vehicle's airbag (120) so that the position of the upper edge (133a) of the first panel of the vehicle's airbag.in the deployed and inflated state comes to a position lower than the upper edge (132a) of the second panel.

## Patentansprüche

1. Airbagvorrichtung mit:
einem Fahrzeugairbag (120), der vor einem Fahrzeuginsassen von der Vorderseite des Fahrzeugs nach hinten in Richtung auf einen Insassenschutzbereich (140) entfaltet und aufgeblasen wird, zum Schutz des Fahrzeuginsassen bei einem Unfall, aufweisend einen rechten Airbagabschnitt (122), der sich im entfalteten und aufgeblasenen Zustand auf der rechten Fahrzeugseite in Vertikalrichtung erstreckt und einen linken Airbagabschnitt (123), der sich im entfalteten und aufgeblasenen Zustand auf der linken Fahrzeugseite in Vertikalrichtung erstreckt, und
einer Einrichtung (111) zum Zuführen von Gas zum Entfalten und Aufblasen des Fahrzeugairbags (120), **dadurch gekennzeichnet, dass**
der Fahrzeugairbag so ausgebildet ist, dass die obere Kante (123a) des Airbagabschnitts, welcher näher an einer Fahrzeugwand (105) positioniert ist, niedriger ist als die obere Kante (122a) des anderen Airbagabschnitts, wobei verhindert wird, dass der zuerst genannte Airbagabschnitt durch die Fahrzeugwand behindert wird.

2. Verfahren zum Herstellen eines Fahrzeugairbags, der vor einem Fahrzeuginsassen von der Vorderseite des Fahrzeugs nach hinten in Richtung auf einen Insassenschutzbereich (140) entfaltet und aufgeblasen wird, zum Schutz des Fahrzeuginsassen bei einem Unfall, aufweisend einen rechten Airbagabschnitt (122), der sich im entfalteten und aufgeblasenen Zustand auf der rechten Fahrzeugseite in Vertikalrichtung erstreckt und einen linken Airbagabschnitt (123), der sich im entfalteten und aufgeblasenen Zustand auf der linken Fahrzeugseite in Vertikalrichtung erstreckt,
**gekennzeichnet durch**:
einen Schritt des Bereitstellens eines ersten Paneels (133), das demjenigen von dem rechten und dem linken Airbagabschnitt des Fahrzeugairbags entspricht, welcher näher an der Fahrzeugwand (105) positioniert ist, eines zweiten Paneels (132), das dem jeweils anderen Airbagabschnitt entspricht, und eines dritten Paneels (131), das zwischen dem ersten und dem zweiten Paneel vorgesehen ist, und Anfertigung, so dass die vertikale Länge des ersten Paneels kürzer ist als die vertikale Länge des zweiten Paneels; und
einen Schritt des Ausbildens mit Anordnen des dritten Paneels zwischen dem ersten und dem zweiten Paneel, und Vernähen dieser Paneele miteinander, um einen sack- bzw. beutelförmigen Fahrzeugairbag (120) so auszubilden, dass die obere Kante (133a) des ersten Paneels des Fahrzeugairbags im entfalteten und aufgeblasenen Zustand an eine Position kommt, die niedriger als die obere Kante (132a) des zweiten Paneels ist.

## Revendications

1. Appareil de coussin de sécurité gonflable comprenant :
un coussin de sécurité gonflable de véhicule (120) qui est déployé et gonflé vers l'arrière d'un véhicule à partir du côté avant du véhicule vers l'avant d'un passager de véhicule vers une zone de protection de passager (140) pour protéger le passager de véhicule en cas d'accident de véhicule et qui comprend une section de coussin de sécurité gonflable droite s'étendant dans la direction verticale sur le côté droit (122) du véhicule et une section de coussin de sécurité gonflable gauche (123) s'étendant dans la direction verticale sur le côté gauche du véhicule dans l'état déployé et gonflé ; et
un moyen d'alimentation en gaz (111) pour fournir du gaz pour le déploiement et le gonflage du coussin de sécurité gonflable de véhicule, **caractérisé en ce que**
le coussin de sécurité gonflable du véhicule est configuré de manière telle que la position du bord supérieur (123a) d'une première des sections de coussin de sécurité gonflable qui est plus près d'une paroi de véhicule (105) soit plus basse que le bord supérieur (122a) de l'autre section de coussin de sécurité gonflable, moyennant quoi la première section de coussin de sécurité gonflable est empêchée de gêner la paroi de véhicule.

2. Méthode de fabrication d'un coussin de sécurité gonflable de véhicule qui est déployé et gonflé vers l'arrière d'un véhicule à partir du côté avant du véhicule vers l'avant d'un passager de véhicule vers une zone de protection de passager (140) pour protéger le passager de véhicule en cas d'accident de véhicule et comprend une section de coussin de sécurité gonflable droite (122) s'étendant dans la direction verticale sur le côté droit du véhicule et une section de coussin de sécurité gonflable gauche (123) s'étendant dans la direction verticale sur le côté gauche du véhicule dans l'état déployé et gonflé, **caractérisé par** :
une étape consistant à préparer un premier panneau qui correspond à une parmi la section de coussin de sécurité gonflable droite et la section de coussin de sécurité gonflable gauche du coussin de sécurité gonflable du véhicule positionnée dans une position plus près de la paroi de véhicule (105), un deuxième panneau (132) qui correspond à l'autre section de coussin de sécurité gonflable, et un troisième panneau (131) interposé entre le premier panneau et le deuxième panneau, et à fabriquer de sorte que la longueur s'étendant verticalement du premier panneau soit inférieure à la longueur s'étendant verticalement du deuxième panneau; et
une étape de formage consistant à interposer le troisième panneau entre le premier panneau et le deuxième panneau, et à coudre ces panneaux les uns aux autres pour former un coussin de sécurité gonflable de véhicule en forme de sac (120) de sorte que la position du bord supérieur (133a) du premier panneau du coussin de sécurité gonflable du véhicule dans l'état déployé et gonflé soit dans une position plus basse que le bord supérieur (132a) du deuxième panneau.
